# EUROPEAN PATENT SPECIFICATION

(11) **EP 3 640 719 B1**
(45) Date of publication and mention of the grant of the patent: **18.12.2024**
(21) Application number: 18818662.1
(22) Date of filing: 11.06.2018
(51) Int. Cl.: G02F 1/1335, G02F 1/137, G02F 1/1333

(54) **LIQUID CRYSTAL DISPLAY DEVICE AND APPLICATION THEREOF**
FLÜSSIGKRISTALLANZEIGEVORRICHTUNG UND ANWENDUNG DAVON
DISPOSITIF D'AFFICHAGE À CRISTAUX LIQUIDES ET SON APPLICATION

(30) Priority: 12.06.2017 CN 201710445052
(43) Date of publication of application: 22.04.2020
(73) Proprietor: Jiangsu Hecheng Display Technology Co., Ltd., Nanjing, Jiangsu 210000 (CN)
(72) Inventor: DING, Wenquan, Yangzhong Jiangsu 212212 (CN); ZHU, Chuncai, Yangzhong Jiangsu 212212 (CN); LI, Pengfei, Yangzhong Jiangsu 212212 (CN)
(74) Representative: Serjeants LLP
(86) International application number: PCT/CN2018/090614
(87) International publication number: WO 2018/228324

(56) References cited:
- EP-A1- 1 666 962
- CN-A- 102 477 233
- CN-A- 102 615 894
- CN-A- 103 197 476
- US-A1- 2006 215 077
- US-A1- 2006 262 247
- US-A1- 2009 136 688
- US-A1- 2012 127 418
- US-B2- 6 788 362

## Description

### Technical Field

The present invention relates to the field of liquid crystal display, in particular to a liquid crystal display device and its uses in the field of electronic paper.

### Background Arts

A revolution in the information display technology began in the early 1970s with the invention of the liquid crystal display (LCD). Since the LCD is a flat-panel display of light weight and low power which provides a visual readout capacity that conforms to the small size, light weight and battery demands of a handheld electronic device, this display technology enabled a new broad class of handheld and other portable products. Commercially, the LCD first appeared in volume as a digital readout on wrist watches, then on instruments and, later, enabled the laptop computer, personal data assistant and many other digital devices. Today LCD technology is nearly replacing cathode ray tubes in televisions and personal computers (PCs).

Nearly every commercial LCD display manufactured and sold today is on glass substrates. Glass offers many features suitable for the manufacture of LCDs. It can be processed at high temperatures, it is rigid and suitably rugged for batch processing methods used in high volume manufacturing, its surface can be made very smooth and uniform over large areas and it has desirable optical properties such as high transparency. There are many applications, however, where glass is far from being the ideal substrate material. Glass substrates cannot be made very flexible and are not very rugged, being unsuitable for web manufacturing and subject to easy breakage. As a result, there is a large worldwide effort to develop displays on more flexible and rugged substrates that can not only conform to three-dimensional configurations but which can also be repeatedly flexed. A display is desired that has the flexibility of a thin plastic sheet, paper or fabric, so that it can be draped, rolled up or folded like paper or cloth.

Cholesteric liquid crystal materials are unique in their optical and electro-optical features. Of principal significance, they can be tailored to Bragg reflect light at a specific wavelength and bandwidth. This feature comes about because these materials possess a helical structure in which the liquid crystal director twists around a helical axis. The distance over which the director rotates 360° is referred to as the pitch and is denoted by P. The reflection band of a cholesteric liquid crystal is centered at the wavelength, λₒ = 0.5(nₑ+nₒ)P and has the bandwidth, Δλ = 0.5(nₑ-nₒ)P which is usually about 100 nm where nₑ and nₒ are the extra-ordinary and ordinary refractive indexes of the liquid crystal, respectively. The reflected light is circularly polarized with the same handedness as the helical structure of the liquid crystal. If the incident light is not polarized, it will be decomposed into two circularly polarized components with opposite handedness and one of the components reflected. The cholesteric material can be electrically switched to either one of two stable textures, planar or focal conic, or to a homeotropically aligned state if a suitably high electric field is maintained. In the planar texture, the helical axis is oriented perpendicular to the substrate to Bragg reflect light in a specific wavelength band, whereas in the focal conic texture it is oriented, on the average, parallel to the substrate so that the material is transparent to all wavelengths except for weak light scattering, negligible on an adjacent dark background. These bistable structures can be electronically switched between each other at rapid rates on the order of milliseconds. Gray scale is also available in that only a portion of a pixel can be switched to the reflective state thereby controlling the reflective intensity.

The bistable cholesteric reflective display technology was introduced in the early 1990's as a low power, sunlight readable technology intended primarily for use on handheld devices. Portable devices demand long battery lifetimes requiring the display to consume very little power. Cholesteric displays are ideal for this application as the bistability feature avoids the need for refreshing power and high reflectivity avoids the need for power-consuming backlights. These combined features can extend battery lifetimes from hours to months over displays that do not have these features. Reflective displays are also easily read in very bright sunlight where backlit displays are ineffective. Due to the high reflective brightness of a cholesteric display and its exceptional contrast ratio, a cholesteric display can be easily read in a dimly lit room. The wide view angle offered by a cholesteric display allows several persons to see the display image at the same time from different positions. In the case of cholesteric materials possessing positive dielectric anisotropy, modes of operation other than a bistable mode are possible by applying a electric field to untwist the cholesteric material into a transparent, homeotropic texture. Quick removal of the electric field transforms the material into the reflective planar texture. The more fundamental aspects of such modern cholesteric displays are disclosed in, for example, U.S. Patents No. 5,437,811 and 5,453,863.

Bistable cholesteric liquid crystal displays have several important electronic drive features that other bistable reflective technologies do not. Of extreme importance for addressing a matrix display of many pixels is the characteristic of a voltage threshold. A threshold voltage is essential for multiplexing a row/column matrix without the need of an expensive active matrix (transistor at each pixel). Bistability with a voltage threshold allows very high-resolution displays to be produced with low-cost passive matrix technology.

Cholesteric liquid crystal materials are particularly well suited for flexible substrates. Such cholesteric displays have been reported by Minolta Co. Ltd. and by Kent Displays, Inc. involving two plastic substrates filled with cholesteric liquid crystal materials (Society for Information Display Proceedings, 1998, pp. 897-900 and 51-54, respectively). While the substrates themselves are flexible, the assembled displays are much less flexible because of the lamination of two substrates together. Minolta has developed procedures for manufacturing flexible displays with two substrates, e.g., see U.S. Patent No. 6,459,467.

Greater flexibility can be achieved if only one substrate is used and the display materials are coated or printed on the substrate. Cholesteric liquid crystals are made suitable for standard coating and printing techniques by forming them into polymer droplet dispersions. As droplet dispersions, the materials are made insensitive to pressure and shear such that an image on a bistable cholesteric display is not readily erased by flexing the substrate. Recently, Stephenson et al., at Kodak fabricated flexible bistable reflective displays with polymer dispersions of cholesteric liquid crystals on a single transparent plastic substrate using photographic methods (US Published Application No. U.S. 2003/0202136A1 and U.S. Patent No. 6,788,362B2). This process involves a sequence of depositions on transparent polyester plastic whereby the final product is a display where the images are viewed through the substrate. Such a process requires substrate materials that are transparent such as a transparent plastic sheet.

It is disclosed in CN Patent No. CN1993725A that a flexible, bendable, monochromatic/chromatic and stable flexible display device may be obtained by means of dispersing cholesteric liquid crystals on cloth or paper using adhesives. However, as for this device, a driving voltage of up to 100 V or higher is required for switching the cholesteric liquid crystals into a planar state - the driving voltage is relatively high; and switching to a focal conic state requires a driving mode of slowly reducing the voltage - the driving mode is relatively complicated. Therefore, the current applications of cholesteric liquid crystal display devices are limited and is difficult to be developed. Furthermore, the manufacturing process of this cholesteric liquid crystal display device is complicated and costly, thereby further limiting its uses. Further relevant prior art is disclosed in US 2006/0251077 A1 and in US 2012/0127418 A1.

In conclusion, as for the stable cholesteric liquid crystals, there is a need for developing a flexible cholesteric liquid crystal display device with simple driving mode and easy manufacturing process.

### Summary of the Invention

Objects: It is an object of the present invention to provide a liquid crystal display device which has advantages, such as low driving voltage, flexible display, reusability and so forth, and is suitable for the field of electronic paper.

Technical solutions of the present invention:
A liquid crystal display device is provided as defined in appended claim 1.

It should be noted that the present invention is not limited to only having two flexible conductive layers. For example, in order to realize multi-region display of the liquid crystal display panel, two or more flexible conductive layers may be disposed. If the configuration of devices in each region is consistent with the technical solutions of the present invention, such a configuration of devices should also be incorporated into the inventive concept of the present invention.

Further, an insulation layer is disposed between at least two flexible conductive layers to avoid electrical short circuits of the device.

Of course, a transparent protective coating may also be disposed on the uppermost layer of at least a portion of liquid crystal display device upon demands.

The liquid crystal display device, excluding the transparent flexible conductive layer not disposed with a light absorbing layer, has a thickness of between 30-200 µm so as to achieve a better thermal printing effect.

The transparent flexible conductive layer not disposed with a light absorbing layer may be a transparent substrate (such as a PET film and so on) coated with a conductive coating (such as coatings formed by conductive ITO, carbon nanotube, silver nanowire, etc.) on the side near the adhesive layer.

The light absorbing layer can absorb light in the visible spectra and preferably has a black, fixed and nontransparent light absorbing background in which the dark black background provides a high contrast ratio of the reflected color image of the liquid crystal display. However, other nontransparent colors may also be used for the fixed background of the cholesteric liquid crystal display. The light absorbing layer is disposed with the adjacent flexible conductive layer incorporatively as one layer. For example, the black conductive adhesive may be used to achieve the purposes of absorbing light of the light absorbing layer and the conductive function of the flexible conductive layer.

The cholesteric liquid crystals are encapsulated into liquid crystal microcapsules by an organic transparent material or an inorganic transparent material, and the liquid crystal microcapsules have a particle size of 5-20 µm.

The organic transparent material is one or more material selected from a group consisting of polyurea, polymethyl methacrylate resin (such as polymethyl methacrylate, PMMA) and polyethylene terephthalate.

The liquid crystal microcapsules may be prepared by means of thermally-induced phase separation, polymerization-induced phase separation, solvent-induced phase separation or emulsion dispersion.

The cholesteric liquid crystals have a refractive index anisotropy of between 0.14-0.25 and thus a better reflection effect. The cholesteric liquid crystals have a clearing point of between 50-90°C and thus a better thermal phase transition effect.

The cholesteric liquid crystals of the present invention have a positive or negative dielectric constant and both can achieve the technical effects of the present invention.

The cholesteric liquid crystals have a reflection wavelength of between 400-650 nm. If the cholesteric liquid crystals are prepared into liquid crystal microcapsules, the liquid crystal microcapsules may have a single reflection wavelength. It is also possible to separately prepare cholesteric liquid crystals having different reflection wavelengths into liquid crystal microcapsules having different reflection wavelengths which then are mixed to form mixed liquid crystal microcapsules.

The adhesives in the adhesive layer comprise one or more heat curable or UV curable adhesives, preferably aqueous adhesives such as aqueous polyurethane, acrylic resin emulsion, bone glue, polyvinyl alcohol (PVA), and so forth.

The UV curable or heat curable adhesives may also be used in the insulation layer, which however is different from the adhesives of the adhesive layer in that: the primary consideration of the adhesive layer is the adhesive strength of adhesives, and the primary consideration of the insulation layer is insulativity.

The adhesive layer containing cholesteric liquid crystals have a mass ratio of cholesteric liquid crystals to adhesives of 2:8-8:2. If the adhesive content is too high, the reflective index of the obtained device will be reduced; if the adhesive content is too low, the support force of the device for external stress is insufficient.

In the present invention, one or more layers in the liquid crystal display device may be prepared by screw printing, squeegee printing or screen printing.

Liquid crystal display device provided by the present invention may be thermally printed within 120°C using a conventional thermal printer such as a GK 888t type label printer. This liquid crystal display device may display the printing effect in a curled manner, and may be used as a flexible and repeatedly used electronic paper.

### Beneficial effects:

By distributing the cholesteric liquid crystals in the adhesive layer, in combination with the arrangement of the transparent flexible conductive layers and the light absorbing layer, the liquid crystal display device of the present invention can maintain the stable characteristic of the cholesteric liquid crystals in a flexible state, thereby changing the display state of the liquid crystals by means of the thermal phase transition of liquid crystals on the basis of the flexibility of the device so as to achieve the display effect of thermal printing when applied to the electronic paper.

As compared with conventional cholesteric liquid crystal display devices, the liquid crystal display device of the present invention has a simple driving mode, eliminates the needs for the driving modes of high voltage or of slowly reducing the voltage, and can obtain the displayed patterns using a conventional thermal printer.

The liquid crystal display device of the present invention may be used flexibly and carried more conveniently than conventional display devices with glass substrates.

As compared with conventional papers or disposable printed display devices, the liquid crystal display device of the present invention may be refreshed by means of electric driving, may be used repeatedly and is more economical and environmentally-friendly.

### BRIEF DESCRIPTION OF THE DRAWINGS

Fig. 1 is a structural schematic diagram of the liquid crystal display device in Example 1;
Fig. 2 is a structural schematic diagram of the liquid crystal display devices in Examples 2, 4 and 5;
Fig. 3 is a structural schematic diagram of the liquid crystal display device in Example 3;
Fig. 4 is a diagram showing the effect of printing the liquid crystal display device in Example 1 by a GK 888t type label printer;

In which, 1 is transparent flexible conductive layer; 2 is insulation layer; 3 is layer of liquid crystal microcapsules; 3-1 is adhesive; 3-2 is liquid crystal microcapsule; 4 is light absorbing layer; 5 is conductive layer; 6 is conductive light absorbing layer; a represents the effect of green words; and b represents the effect of black background.

### DETAILED EMBODIMENTS

The present invention will be illustrated by combining the detailed embodiments below. It should be noted that, the following examples are exemplary embodiments of the present invention, which are only used to illustrate the present invention, not to limit it. Other combinations and various modifications within the conception of the present invention are possible without departing from the subject matter defined in the claims.

The following HPC850100-100, HSG07900-000 and HMT138600-1001001 were the trade names of liquid crystal products produced by Jiangsu Hecheng Display Technology Co., Ltd., which are commercially available. OCA optical adhesive was purchased from Shenzhen Dalton Electronic Material Co., Ltd. JFA-11 type coating machine produced by Shanghai Xiandai Environment Engineering Technology Co., Ltd. was used as the coating machine. The conductive adhesive was a commercially available GRAPHIT33 type conductive adhesive.

The following techniques such as screw printing, squeegee printing, screen printing and so forth all are known to those skilled in the art and will not be described below.

### Example 1, which is not within the scope of the invention

An appropriate optically active substance was added to HPC850100-100 to adjust its cholesteric phase reflection wavelength to be about 546 nm. 80 mL of dichloromethane pre-dissolved with 1 g PMMA prepolymer was mixed with 400 mL of 1 wt% polymethacrylic acid (PMAA) aqueous solution, and then 20 g of cholesteric liquid crystals were added and mixed uniformly to form an emulsion. The dichloromethane was removed by a solvent evaporation method to obtain an aqueous solution containing liquid crystal microcapsules with a diameter of about 10 µm (containing about 50 wt% of liquid crystal microcapsules). The obtained aqueous solution of liquid crystal microcapsules was then uniformly mixed with 20 wt% PVA aqueous solution per a volume ratio of 1:1 for future use.

Conductive PET-ITO with a thickness of 125 µm was used as the first substrate, and was flattened on a coating machine. A layer of 20 µm thick OCA optical adhesive (purchased from Shenzhen Dalton Electronic Material Co., Ltd.) was coated on the surface of the substrate using screw printing technique, polymerized and cured under a fluorescent lamp of 365 nm in an illuminance of 8 mW for 3 minutes after drying at a high temperature of 100 °C for 3 minutes. A layer of 40 µm thick liquid crystal microcapsule solution mixed with PVA obtained above was then coated on the surface of the OCA optical adhesive using squeegee printing technique, and dried at 40°C for 5 hours. A layer of 10 µm thick 20 wt% PVA aqueous solution mixed with an appropriate black dye was then coated on the film using squeegee printing technique, and dried at 40°C for 5 hours. Finally, the liquid crystal display device of the present invention was prepared by further coating a layer of 10 µm thick conductive silver paste via screw printing technique and drying at 80°C for 0.5 hour.

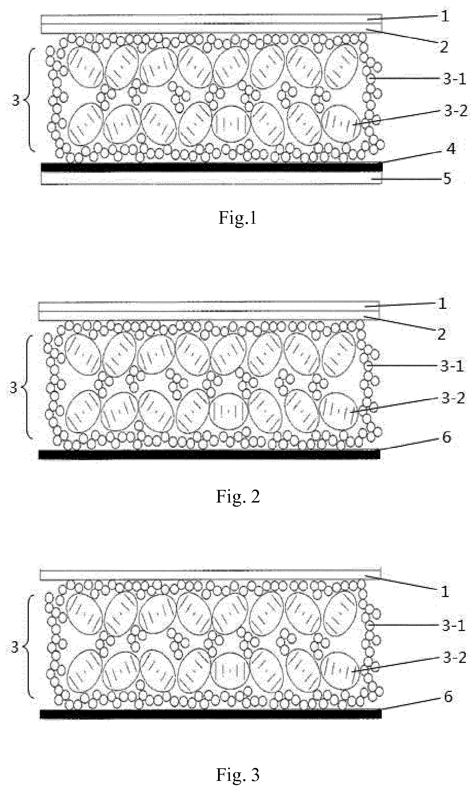

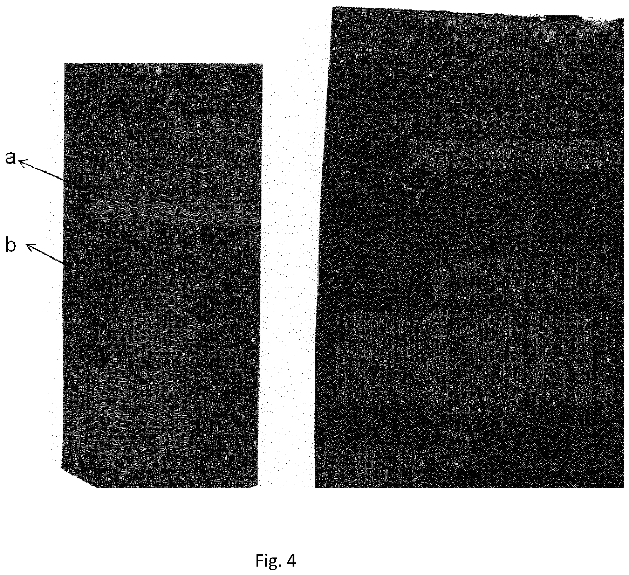

The structure of the obtained liquid crystal display device was shown in Fig. 1. The device could be switched to a focal conic state by applying a voltage of 50 V, and the printing effect of green-on-black could be realized using a conventional GK 888t type label printer (as shown in Fig. 4, the figure is in a grayscale mode of an actual photograph, in which the gray area a represents the effect of green words and the black area b represents the effect of black background). The device was tested using the DMS 505 tester to have a reflective index of 25% and a contrast ratio (i.e., a ratio of the reflection intensity in the planar state to the reflection intensity in the focal conic state) of 3. The device was flexible and could be used repeatedly.

### Example 2

The preparation method of the aqueous solution of liquid crystal microcapsules in this Example was substantially same as that of Example 1, except replacing the liquid crystals and cholesteric phase reflection wavelength in Example 1 with HSG07900-000 and about 625 nm, respectively. The obtained aqueous solution of liquid crystal microcapsules was then uniformly mixed with 20 wt% bone adhesive aqueous solution per a volume ratio of 4:6 for future use.

Conductive PET-ITO with a thickness of 75 µm was used as the first substrate, and was flattened on a coating machine. A layer of 20 µm thick OCA optical adhesive was coated on the surface of the substrate using screw printing technique, polymerized and cured under a fluorescent lamp of 365 nm in an illuminance of 8 mW for 3 minutes after drying at a high temperature of 100°C for 3 minutes. A layer of 40 µm thick liquid crystal microcapsule solution mixed with bone adhesive obtained above was then coated on the surface of the OCA optical adhesive using squeegee printing technique, and dried at 40 °C for 5 hours. The liquid crystal display device of the present invention was then prepared by coating a layer of 20 µm thick black conductive adhesive on the film using squeegee printing technique and drying at 50°C for 0.5 hour.

The structure of the obtained liquid crystal display device was shown in Fig. 2. The device could be switched to a focal conic state by applying a voltage of 80 V, and the printing effect of red-on-black can be realized using a conventional GK 888t type label printer. The device was tested using a DMS 505 tester to have a reflective index of 20% and a contrast ratio of 2. The device was flexible and could be used repeatedly.

### Example 3

HMT138600-1001001 was mixed with 33 wt% polyurethane aqueous solution per a volume ratio of 6:4, stirred at a stirring rate of 1000 rpm for 5 minutes, and defoamed to obtain a suspended emulsion, in which the liquid crystal particles with a particle size of about 15 µm were observed to disperse in polyurethane aqueous solution under a microscope, for future use.

Conductive PET-ITO with a thickness of 188 µm was used as the first substrate, and was flattened on a coating machine. A layer of 30 µm thick liquid crystal emulsion mixed with polyurethane aqueous solution obtained above was then coated on the surface of the substrate using screw printing technique, and dried at 80°C for 5 hours. The liquid crystal display device of the present invention was then prepared by coating a layer of 20 µm thick black conductive adhesive on the film using squeegee printing technique and drying at 50°C for 0.5 hour.

The structure of the obtained liquid crystal display device was shown in Fig. 3. The device could be switched to a focal conic state by applying a voltage of 60 V, and the printing effect of yellowgreen-on-black could be realized using a conventional GK 888t type label printer. The device was tested using a DMS 505 tester to have a reflective index of 25% and a contrast ratio of 2. The device was flexible and could be used repeatedly.

### Example 4

The preparation method of the aqueous solution of liquid crystal microcapsules in this Example was substantially same as that of Example 1, except replacing the liquid crystals and prepolymer in Example 1 with HSG07900-000 and poly(isobutyl methacrylate), respectively. The obtained aqueous solution of liquid crystal microcapsules was then uniformly mixed with 20 wt% bone adhesive aqueous solution per a volume ratio of 4:6 for future use.

Conductive PET-ITO with a thickness of 75 µm was used as the first substrate, and was flattened on a coating machine. A layer of 20 µm thick OCA optical adhesive was coated on the surface of the substrate using screw printing technique, polymerized and cured under a fluorescent lamp of 365 nm in an illuminance of 8 mW for 3 minutes after drying at a high temperature of 100°C for 3 minutes. A layer of 30 µm thick liquid crystal microcapsule solution mixed with glue adhesive obtained above was then coated on the surface of the OCA optical adhesive using squeegee printing technique, and dried at 40 °C for 5 hours. The liquid crystal display device of the present invention was then prepared by coating a layer of 20 µm thick black conductive adhesive on the film using squeegee printing technique and drying at 50°C for 0.5 hour.

The structure of the obtained liquid crystal display device was shown in Fig. 2. The device could be switched to a planar state (in green) by applying a voltage of 40 V, and the printing effect of black-on-green could be realized using a conventional GK 888t type label printer. The device was tested using a DMS 505 tester to have a reflective index of 20% and a contrast ratio of 2. The device was flexible and could be used repeatedly.

### Example 5

Appropriate optically active substances were respectively added to HSG07900-000 to adjust its cholesteric phase reflection wavelengths to be about 480 nm, about 546 nm and about 625 nm. Three batches of 80 mL dichloromethane pre-dissolved with 1 g PMMA prepolymer were mixed with 400 mL of 1 wt% polymethacrylic acid (PMAA) aqueous solution, and then 20 g cholesteric liquid crystals with the above different reflection wavelengths were added respectively and mixed uniformly to form emulsions. The dichloromethane was removed by a solvent evaporation method to obtain aqueous solutions containing liquid crystal microcapsules with a diameter of about 10 µm and different reflection wavelengths respectively. The three aqueous solutions of liquid crystal microcapsules with different reflection wavelengths were uniformly mixed per a volume ratio of 3:3:3 to obtain an aqueous solution of mixed liquid crystal microcapsules. The obtained aqueous solution of mixed liquid crystal microcapsules was then mixed with 20 wt% bone adhesive aqueous solution per a volume ratio of 4:6 for future use.

Conductive PET-ITO with a thickness of 188 µm was used as the first substrate, and was flatteded on a coating machine. A layer of 20 µm thick OCA optical adhesive was coated on the surface of the substrate using screw printing technique, polymerized and cured under a fluorescent lamp of 365 nm in an illuminance of 8 mW for 3 minutes after drying at a high temperature of 100 °C for 3 minutes. A layer of 40 µm thick mixed liquid crystal microcapsule solution mixed with bone adhesive obtained above was then coated on the surface of the OCA optical adhesive using squeegee printing technique, and dried at 40°C for 5 hours. The liquid crystal display device of the present invention was then prepared by coating a layer of 20 µm thick black conductive adhesive on the film using squeegee printing technique and drying at 50°C for 0.5 hour.

The structure of the obtained liquid crystal display device was shown in Fig. 2. The device could be switched to a planar state (in black) by applying a voltage of 50 V, and the printing effect of white-on-black could be realized using a conventional GK 888t type label printer. The device was tested using a DMS 505 tester to have a reflective index of 20% and a contrast ratio of 2. The device was flexible and could be used repeatedly.

By distributing the cholesteric liquid crystals in the adhesive layer, in combination with the arrangement of the transparent flexible conductive layers and the light absorbing layer, the liquid crystal display device of the present invention can maintain the stable characteristic of the cholesteric liquid crystals in a flexible state, thereby changing the display state of the liquid crystals by means of the thermal phase transition of liquid crystals on the basis of the flexibility of the device so as to achieve the display effect of thermal printing when applied to the electronic paper. As compared with conventional cholesteric liquid crystal display devices, the liquid crystal display device of the present invention has a simple driving mode, eliminates the needs for the driving modes of high voltage or of slowly reducing the voltage, and can obtain the displayed patterns using a conventional thermal printer. The liquid crystal display device of the present invention may be used flexibly and carried more conveniently than conventional display devices with glass substrates. As compared with conventional papers or disposable printed display devices, the liquid crystal display device of the present invention may be refreshed by means of electric driving, may be used repeatedly and is more economical and environmentally-friendly.

There may be other various embodiments in the present invention. Without departing from the spirit and scope of the invention, one skilled in the art can make various corresponding changes and modifications in accordance with the present invention, which are intended to be included within the scope of the appended claims of the present invention.

### INDUSTRIAL APPLICABILITY

The liquid crystal composition related in the present invention can be applied to the field of liquid crystal.

## Claims

1. A liquid crystal display device comprising:
at least two flexible conductive layers (1; 6), wherein one of the at least two flexible conductive layers is a transparent flexible conductive layer (1), and another one of the at least two flexible conductive layers is a non-transparent flexible conductive layer (6), the liquid crystal display device further comprising an adhesive layer (3-1) containing cholesteric liquid crystals (3-2) and sandwiched between the one and the another one of the at least two flexible conductive layers, wherein a light absorbing layer (6) is disposed on a side of the non-transparent flexible conductive layer near the adhesive layer; and when the thickness of the transparent flexible conductive layer not disposed with the light absorbing layer is not comprised, the liquid crystal display device has a thickness of between 30-200 µm; and the light absorbing layer can absorb light in the visible spectrum,
**characterised in that**
the light absorbing layer is disposed with the non-transparent flexible conductive layer incorporatively as one layer.

2. The liquid crystal display device according to claim 1, **characterized in that**, an insulation layer (2) is disposed between the at least two flexible conductive layers

3. The liquid crystal display device according to claim 1, **characterized in that**, a transparent protective coating can be disposed on at least a portion of an outermost layer of the liquid crystal display device.

4. The liquid crystal display device according to claim 1, **characterized in that**, the transparent flexible conductive layer not disposed with the light absorbing layer is a transparent substrate coated with a conductive coating on the side near the adhesive layer.

5. The liquid crystal display device according to claim 1, **characterized in that**, the cholesteric liquid crystals are encapsulated into liquid crystal microcapsules by an organic transparent material or an inorganic transparent material, and the liquid crystal microcapsules have a diameter of 5-20 µm.

6. The liquid crystal display device according to claim 5, **characterized in that**, the organic transparent material is one or more selected from a group consisting of polyurea, polymethyl methacrylate resin and polyethylene terephthalate.

7. The liquid crystal display device according to claim 5, **characterized in that**, the liquid crystal microcapsules can be prepared by means of thermally-induced phase separation, polymerization-induced phase separation, solvent-induced phase separation or emulsion dispersion.

8. The liquid crystal display device according to claim 1, **characterized in that**, the cholesteric liquid crystals have a refractive index anisotropy of between 0.14-0.25; and the cholesteric liquid crystals have a clearing point of between 50-90°C.

9. The liquid crystal display device according to claim 1, **characterized in that**, the cholesteric liquid crystals have a positive or negative dielectric constant.

10. The liquid crystal display device according to claim 1, **characterized in that**, the cholesteric liquid crystals have a reflection wavelength of between 400-650 nm.

11. The liquid crystal display device according to claim 5, **characterized in that**, the liquid crystal microcapsules have a reflection wavelength of between 400-650 nm, and the liquid crystal microcapsules can be composed of liquid crystal microcapsules with a single reflection wavelength or a mixture of liquid crystal microcapsules with different reflection wavelengths.

12. The liquid crystal display device according to claim 1, **characterized in that**, the adhesive layer containing cholesteric liquid crystals has a mass ratio of the cholesteric liquid crystals to the adhesive of 2:8-8:2.

13. Use of the liquid crystal display device according to any one of claims 1-12 in the manufacture of electronic paper.

## Patentansprüche

1. Flüssigkristallanzeigevorrichtung, umfassend:
mindestens zwei flexible leitfähige Schichten (1; 6), wobei eine der mindestens zwei flexiblen leitfähigen Schichten eine transparente flexible leitfähige Schicht (1) ist und eine andere der mindestens zwei flexiblen leitfähigen Schichten eine nicht-transparente flexible leitfähige Schicht (6) ist, wobei die Flüssigkristallanzeigevorrichtung weiter eine Klebeschicht (3-1) umfasst, die cholesterische Flüssigkristalle (3-2) enthält und zwischen der einen und der anderen der mindestens zwei flexiblen leitfähigen Schichten eingeschlossen ist, wobei eine Lichtabsorptionsschicht (6) auf einer Seite der nicht-transparenten flexiblen leitfähigen Schicht nahe der Klebeschicht angeordnet ist; und
wenn die Dicke der transparenten flexiblen leitfähigen Schicht, die nicht mit der Lichtabsorptionsschicht angeordnet ist, nicht umfasst ist, die Flüssigkristallanzeigevorrichtung eine Dicke zwischen 30-200 µm aufweist; und die Lichtabsorptionsschicht Licht im sichtbaren Spektrum absorbieren kann,
**dadurch gekennzeichnet, dass**
die Lichtabsorptionsschicht mit der nicht-transparenten flexiblen leitfähigen Schicht eingebaut als eine Schicht angeordnet ist.

2. Flüssigkristallanzeigevorrichtung nach Anspruch 1, **dadurch gekennzeichnet, dass** eine Isolierschicht (2) zwischen den mindestens zwei flexiblen leitfähigen Schichten angeordnet ist.

3. Flüssigkristallanzeigevorrichtung nach Anspruch 1, **dadurch gekennzeichnet, dass** eine transparente Schutzbeschichtung auf zumindest einem Abschnitt einer äußersten Schicht der Flüssigkristallanzeigevorrichtung angeordnet sein kann.

4. Flüssigkristallanzeigevorrichtung nach Anspruch 1, **dadurch gekennzeichnet, dass** die transparente flexible leitfähige Schicht, die nicht mit der Lichtabsorptionsschicht angeordnet ist, ein transparentes Substrat ist, das mit einer leitfähigen Beschichtung auf der Seite nahe der Klebeschicht beschichtet ist.

5. Flüssigkristallanzeigevorrichtung nach Anspruch 1, **dadurch gekennzeichnet, dass** die cholesterischen Flüssigkristalle durch ein organisches transparentes Material oder ein anorganisches transparentes Material in Flüssigkristall-Mikrokapseln eingekapselt sind und die Flüssigkristall-Mikrokapseln einen Durchmesser von 5-20 µm aufweisen.

6. Flüssigkristallanzeigevorrichtung nach Anspruch 5, **dadurch gekennzeichnet, dass** das organische transparente Material eines oder mehr aus der Gruppe bestehend aus Polyharnstoff, Polymethylmethacrylatharz und Polyethylenterephthalat ist.

7. Flüssigkristallanzeigevorrichtung nach Anspruch 5, **dadurch gekennzeichnet, dass** die Flüssigkristall-Mikrokapseln mittels thermisch induzierter Phasentrennung, polymerisationsinduzierter Phasentrennung, lösungsmittelinduzierter Phasentrennung oder Emulsionsdispersion hergestellt werden können.

8. Flüssigkristallanzeigevorrichtung nach Anspruch 1, **dadurch gekennzeichnet, dass** die cholesterischen Flüssigkristalle eine Brechungsindexanisotropie zwischen 0,14-0,25 aufweisen; und die cholesterischen Flüssigkristalle einen Klärpunkt zwischen 50-90 °C aufweisen.

9. Flüssigkristallanzeigevorrichtung nach Anspruch 1, **dadurch gekennzeichnet, dass** die cholesterischen Flüssigkristalle eine positive oder negative Dielektrizitätskonstante aufweisen.

10. Flüssigkristallanzeigevorrichtung nach Anspruch 1, **dadurch gekennzeichnet, dass** die cholesterischen Flüssigkristalle eine Reflexionswellenlänge zwischen 400-650 nm aufweisen.

11. Flüssigkristallanzeigevorrichtung nach Anspruch 5, **dadurch gekennzeichnet, dass** die Flüssigkristall-Mikrokapseln eine Reflexionswellenlänge zwischen 400-650 nm aufweisen und die Flüssigkristall-Mikrokapseln aus Flüssigkristall-Mikrokapseln mit einer einzigen Reflexionswellenlänge oder einer Mischung von Flüssigkristall-Mikrokapseln mit unterschiedlichen Reflexionswellenlängen zusammengesetzt sein können.

12. Flüssigkristallanzeigevorrichtung nach Anspruch 1, **dadurch gekennzeichnet, dass** die Klebeschicht, die cholesterische Flüssigkristalle enthält, ein Massenverhältnis der cholesterischen Flüssigkristalle zum Klebstoff von 2:8-8:2 aufweist.

13. Verwendung der Flüssigkristallanzeigevorrichtung nach einem der Ansprüche 1-12 bei der Herstellung von elektronischem Papier.

## Revendications

1. Dispositif d'affichage à cristaux liquides comprenant :
au moins deux couches conductrices flexibles (1 ; 6), dans lequel une des au moins deux couches conductrices flexibles est une couche conductrice flexible transparente (1), et une autre des au moins deux couches conductrices flexibles est une couche conductrice flexible non transparente (6), le dispositif d'affichage à cristaux liquides comprenant en outre une couche adhésive (3-1) contenant des cristaux liquides cholestériques (3-2) et prise en sandwich entre l'une et l'autre des au moins deux couches conductrices flexibles, dans lequel une couche absorbant la lumière (6) est disposée sur un côté de la couche conductrice flexible non transparente à proximité de la couche adhésive ; et
lorsque l'épaisseur de la couche conductrice flexible transparente non disposée avec la couche absorbant la lumière n'est pas comprise, le dispositif d'affichage à cristaux liquides présente une épaisseur entre 30 et 200 µm ; et la couche absorbant la lumière peut absorber la lumière dans le spectre visible,
**caractérisé en ce que**
la couche absorbant la lumière est disposée avec la couche conductrice flexible non transparente d'un seul tenant comme une seule couche.

2. Dispositif d'affichage à cristaux liquides selon la revendication 1, **caractérisé en ce qu'**une couche isolante (2) est disposée entre les au moins deux couches conductrices flexibles.

3. Dispositif d'affichage à cristaux liquides selon la revendication 1, **caractérisé en ce qu'**un revêtement protecteur transparent peut être disposé sur au moins une partie d'une couche la plus externe du dispositif d'affichage à cristaux liquides.

4. Dispositif d'affichage à cristaux liquides selon la revendication 1, **caractérisé en ce que** la couche conductrice flexible transparente non disposée avec la couche absorbant la lumière est un substrat transparent recouvert d'un revêtement conducteur sur le côté proche de la couche adhésive.

5. Dispositif d'affichage à cristaux liquides selon la revendication 1, **caractérisé en ce que** les cristaux liquides cholestériques sont encapsulés dans des microcapsules de cristaux liquides par un matériau transparent organique ou un matériau transparent inorganique, et les microcapsules de cristaux liquides présentent un diamètre de 5 à 20 µm.

6. Dispositif d'affichage à cristaux liquides selon la revendication 5, **caractérisé en ce que** le matériau transparent organique est un ou plusieurs éléments choisis dans un groupe consistant en polyurée, résine de polyméthacrylate de méthyle et polyéthylène téréphtalate.

7. Dispositif d'affichage à cristaux liquides selon la revendication 5, **caractérisé en ce que** les microcapsules de cristaux liquides peuvent être préparées au moyen d'une séparation de phase induite thermiquement, d'une séparation de phase induite par polymérisation, d'une séparation de phase induite par solvant ou d'une dispersion d'émulsion.

8. Dispositif d'affichage à cristaux liquides selon la revendication 1, **caractérisé en ce que** les cristaux liquides cholestériques présentent une anisotropie d'indice de réfraction entre 0,14 et 0,25; et les cristaux liquides cholestériques présentent un point de clarification entre 50 et 90 °C.

9. Dispositif d'affichage à cristaux liquides selon la revendication 1, **caractérisé en ce que** les cristaux liquides cholestériques présentent une constante diélectrique positive ou négative.

10. Dispositif d'affichage à cristaux liquides selon la revendication 1, **caractérisé en ce que** les cristaux liquides cholestériques présentent une longueur d'onde de réflexion entre 400 et 650 nm.

11. Dispositif d'affichage à cristaux liquides selon la revendication 5, **caractérisé en ce que** les microcapsules de cristaux liquides présentent une longueur d'onde de réflexion entre 400 et 650 nm, et les microcapsules de cristaux liquides peuvent être composées de microcapsules de cristaux liquides avec une seule longueur d'onde de réflexion ou d'un mélange de microcapsules de cristaux liquides avec différentes longueurs d'onde de réflexion.

12. Dispositif d'affichage à cristaux liquides selon la revendication 1, **caractérisé en ce que** la couche adhésive contenant des cristaux liquides cholestériques présente un rapport massique des cristaux liquides cholestériques à l'adhésif de 2:8-8:2.

13. Utilisation du dispositif d'affichage à cristaux liquides selon l'une quelconque des revendications 1-12 dans la fabrication de papier électronique.
